# EUROPÄISCHE PATENTSCHRIFT

(11) **EP 3 860 890 B1**
(45) Veröffentlichungstag und Bekanntmachung des Hinweises auf die Patenterteilung: **21.06.2023**
(21) Anmeldenummer: 18836256.0
(22) Anmeldetag: 21.12.2018
(51) Int. Cl.: B60T 1/10, B60L 7/10, B61H 9/06, B60M 3/06, B60T 13/58, F16D 61/00, H02K 7/18, H02P 3/18, B61C 3/02, B60T 13/66, B60T 17/22

(54) **RADSATZ UND ANTRIEBSSYSTEM FÜR EIN SCHIENENFAHRZEUG**
WHEELSET AND DRIVE SYSTEM FOR A RAIL VEHICLE
ESSIEU MONTÉ ET SYSTÈME D'ENTRAÎNEMENT POUR UN VÉHICULE FERROVIAIRE

(30) Priorität: 03.10.2018 WO PCT/EP2018/076914
(43) Veröffentlichungstag der Anmeldung: 11.08.2021
(73) Patentinhaber: Schweizerische Bundesbahnen SBB, 3000 Bern 65 (CH)
(72) Erfinder: VON ARX, Raphael, 3000 Bern 65 (CH); GEHRIG, Urs, 3000 Bern 65 (CH); VILFROY, André, 3000 Bern 65 (CH); GROSSENBACHER, Thomas, 3000 Bern 65 (CH); NEUENSCHWANDER, Christoph, 3000 Bern 65 (CH); SIGRIST, Martin, 2503 Biel (CH); MAST, Markus, 2503 Biel (CH)
(74) Vertreter: Rentsch Partner AG
(86) Internationale Anmeldenummer: PCT/EP2018/086773
(87) Internationale Veröffentlichungsnummer: WO 2020/069766

(56) Entgegenhaltungen:
- EP-A1- 1 804 363
- EP-A2- 2 080 647
- EP-A2- 2 476 573
- WO-A1-2016/157146
- DE-A1-102006 044 964

## Beschreibung

### TECHNISCHES GEBIET

Die vorliegende Erfindung betrifft einen Radsatz für ein Schienenfahrzeug, insbesondere für ein Vollbahn-Schienenfahrzeug, sowie ein Antriebssystem für ein mit einem solchen Radsatz ausgerüstetes Schienenfahrzeug.

### HINTERGRUND DER ERFINDUNG

Für den Betrieb von Schienenfahrzeugen, insbesondere von Schienenfahrzeugen der Vollbahn, bzw. Vollbahn-Eisenbahn, sind eine Vielzahl von Antriebs- und Bremssystemen bekannt. Verbreitet als Triebfahrzeuge sind Lokomotiven, welche im Wesentlichen ausschliesslich zum Antrieb an sie angeschlossener passiver Schienenfahrzeuge dienen. Um den Betrieb von Zugs-Kompositionen energetisch zu verbessern, verfügen elektrisch betriebene Lokomotiven teilweise über Nutzbremsen zur Rückspeisung von Bremsenergie in Fahrleitungen. Diese Systeme sind jeweils so ausgelegt, dass sie insbesondere bei längeren Bergabfahrten und/oder bei hohen Fahrgeschwindigkeiten elektrisch, also via Motor, abgebremst werden können, wodurch auch mit ihnen verbundene weitere Schienenfahrzeuge abgebremst werden können. Gerade bei grösseren Verbunden von Schienenfahrzeugen ist ein solches elektrisches Abbremsen durch das Triebfahrzeug in vielen Situationen - insbesondere auch bei niedrigen Fahrgeschwindigkeiten - jedoch nicht ausreichend, weshalb zusätzliche Bremsleistung benötigt wird. Diese zusätzliche Leistung wird vor allem im Bereich Vollbahn herkömmlich meist von an den Radsätzen der einzelnen Schienenfahrzeuge angeordneten Druckluftbremsen zur Verfügung gestellt. Dazu wird ausgehend von einem üblicherweise in der Lokomotive angeordneten Druckluftgenerator (Kompressor), Trocknungsanlagen und daran angeschlossene Druckbehälter über Druckluftleitungen ein sich über einen Verbund mehrerer Schienenfahrzeuge erstreckendes Druckluftsystem aufgebaut. Druckluft dient in solchen Systemen als Energieträger und auch zur Steuerung eines Bremsvorgangs. Bei einem aktivierbaren Bremsvorgang werden aufgrund veränderter Druckluftverteilung im Bremssystem mittels pneumatisch betriebener Bremszangen (bzw. Bremssattel) Bremsklötze bzw. Bremsbeläge in Reibverbindung mit auf den Radsatzwellen der Schienenfahrzeuge angeordneten Bremsscheiben gebracht oder auch z.B. Bremsklötze in Reibverbindung mit den Laufflächen der Räder gebracht. In Folge davon findet eine Umwandlung der Rotationsenergie der Radsätze in thermische Energie statt, wodurch das Schienenfahrzeug, bzw. ein Verbund bestehend aus mehreren Schienenfahrzeugen, abgebremst wird. Diese Systeme benötigen einen relativ grossen Installationsraum in den Lokomotiven sowie in den verbundenen Wagen. Dies auch deshalb, weil die zentral in Lokomotiven angeordneten Komponenten solcher Pneumatiksysteme derart dimensioniert werden müssen, dass sie für theoretische maximale Verbundgrössen ausreichen. Eine optimale Skalierung der Pneumatiksysteme auf Kompositionen anderer Grössen lässt sich anschliessend kaum mehr erreichen. Derart dimensionierte Bremssysteme sind deshalb für den realen Bahnbetrieb häufig überdimensioniert, was u.a. einen unverhältnismässig hohen Platzbedarf und hohen Wartungsaufwand nach sich zieht.

Ebenso müssen beim Rangieren solcher Schienenfahrzeuge besondere Vorkehrungen getroffen werden, um ein ungewolltes Bremsen zu verhindern.

Bei konventionellen Lokomotiven mit als Nutzbremsen einsetzbaren Elektromotoren tritt zudem grundsätzlich ein weiteres Skalierungsproblem auf. Für den Einsatz als Nutzbremsen müssen die eingesetzten Elektromotoren nämlich wesentlich leistungsfähiger dimensioniert werden, als wenn sie nur zum reinen Antrieb verwendet würden. Folglich müssen auch Getriebe bzw. Übersetzungen entsprechend leistungsfähig dimensioniert werden. All dies trägt dazu bei, dass solche Antriebe mit Nutzbremsen etwa in Triebwagen gar nicht oder nur mit niedrigen Wirkungsgraden eingesetzt werden können. Ausserdem muss bei der Dimensionierung von Elektromotor und Getrieben eine bestimmte theoretische Verbundgrösse, bzw. zu erwartende maximale Gesamtmasse einer Komposition von Schienenfahrzeugen angenommen werden. All dies erhöht einerseits die Herstellungskosten solcher Lokomotiven mit Nutzbremsen. Andererseits weisen solche Lokomotiven wegen der für Geschwindigkeitsaufnahme und Konstantfahrphasen nicht ganz optimalen Dimensionierung häufig einen niedrigen energetischen Wirkungsgrad ausserhalb der Verzögerungsphasen (Bremsphasen) auf.

Mit herkömmlichen Antriebs- und Bremssystemen ausgestattete Kompositionen von Schienenfahrzeugen werden deshalb im realen Bahnbetrieb häufig in Zuständen betrieben, in welchen sie einen energetisch nicht optimalen Wirkungsgrad aufweisen und verursachen zudem überhöhte Kosten im Unterhalt. All dies führt dazu, dass die bestehenden Antriebs- und Bremssysteme einen bedeutenden Kostenfaktor im Betrieb von Schienenfahrzeugen im Bereich der Vollbahn ausmachen.

Die DE102010032516A1 wurde am 02.02.2012 im Namen der Knorr-Bremse für Schienenfahrzeuge GmbH veröffentlicht und zeigt eine Bremsvorrichtung eines Fahrzeugs beinhaltend eine Wirbelstromscheibenbremse mit einem drehfesten Stator und einem rotierenden Rotor. Der Rotor oder der Stator trägt eine Wirbelstrombahn und der Stator oder der Rotor trägt eine Magnetanordnung. Deren magnetische Feldlinien induzieren bei relativer Bewegung des Rotors gegenüber dem Stator in der Wirbelstrombahn Wirbelströme zur Erzeugung eines Bremsmoments. Ebenso offenbart wird eine Reibungsscheibenbremse mit wenigstens einer Bremsscheibe und mit dieser Bremsscheibe zusammen wirkenden Bremsbelägen zur Erzeugung eines Bremsreibmoments zwischen der Bremsscheibe und den Bremsbelägen. Die DE102010032516 sieht vor, dass der Rotor der Wirbelstromscheibenbremse durch die Bremsscheibe der Reibungsscheibenbremse gebildet wird.

EP1804363 A1, publiziert am 04.07.2007 im Namen von Landert Motoren AG, offenbart einen grossvolumigen, leistungsfähigen Achsgenerator für Eisenbahnwagen. Der Achsgenerator hat einen Rotor, der mit der Radsatzwelle drehfest verbunden ist, und ein Statorgehäuse, das gehäusefest mit dem Drehgestellrahmen verbunden ist. Der Achsgenerator ist direkt auf der Radsatzwelle angeflanscht und ist von dieser durchgriffen. Dadurch wird eine einfache und platzsparende Montage des Achsgenerators erzielt. Wesentlich ist, dass der Achsgenerator grossvolumig ist, um eine hohe Leistung bereits ab einer Umdrehung von 200 U/min zu erzielen. Auf einer Radsatzwelle können mehrere dieser Achsgeneratoren angeordnet sein.

EP2080647 A2, publiziert am 22.07.2009 im Namen von SBZ Schörling-Brock Zweiwegetechnik GmbH, offenbart eine Schienenfahreinrichtung, die vorzugsweise für den Betrieb auf Schienen und Strasse geeignet ist. Jedem Schienenlaufrad kann ein Elektromotor zugeordnet sein. Die Elektroenergieversorgung kann aus einer Verbrennungskraftmaschine und einem Generator bestehen. Der Elektromotor kann als generatorische Bremse betrieben werden, wobei die generatorisch erzeugte Bremsenergie in einem elektrischen Speichermedium, z.B. Akku, gespeichert wird. Der Elektromotor kann über ein Getriebe mit dem Schienenlaufrad gekoppelt sein.

WO2016/157146 A1, publiziert am 06.10.2016 im Namen von Transnet Soc. Ltd., offenbart einen Zug mit einem Drehgestell mit einem mechanischen regenerativen Bremssystem und Energiespeicher. Das Bremssystem kann auch als Antrieb betrieben werden. Das regenerative Bremssystem kann ein Schwungrad als mechanischen Energiespeicher aufweisen, das über ein mechanisches Transmissionssystem an eine Achse des Drehgestells angekoppelt ist, z.B. über eine Antriebskette, einen Treibriemen mit Riemenscheiben oder ein Getriebe, und ggf. eine Kupplung. Das mechanische Transmissionssystem ist über eine Steuerung so ansteuerbar, dass der Zug abgebremst oder beschleunigt werden kann.

DE102006044964 A1, publiziert am 03.04.2008 im Namen von Siemens AG, offenbart eine Getriebeeinheit für ein Schienenfahrzeug mit einem Getriebegehäuse, bei dem an Durchführungen für Getriebewellen axial hintereinander eine berührungsfreie und eine berührungsbehaftete Wellendichtung angeordnet sind.

EP2476573 A2, publiziert am 18.07.2012 im Namen von John Kinghorn, offenbart ein flexibles Energiemanagementsystem für Eisenbahnen mit variablen Zugkompositionen. Hierfür wird mindestens ein erstes Schienenfahrzeug ohne eigene Stromversorung und mindestens ein zweites regeneratives Schienenfahrzeug mit regenerativer Bremse und Speicherbatterie o.ä. für regenerativ erzeugte Energie in die Zugkomposition eingebracht. Das regenerative Schienenfahrzeug kann alternativ oder ergänzend zur übergeordneten Stromversorgung eine lokale Stromversorgung aus der regenerativ erzeugten und zwischengespeicherten elektrischen Energie für das erste Schienenfahrzeug zur Verfügung stellen.

### DARSTELLUNG DER ERFINDUNG

Es ist eine Aufgabe der Erfindung einen Radsatz für ein Schienenfahrzeug zur Verfügung zu stellen, welcher wenigstens einen der aus dem Stand der Technik bekannten Nachteile bekannter Antriebssysteme behebt oder reduziert. Die Erfindung ist in den beigefügten Ansprüchen dargelegt.

Ein erfindungsgemässer Radsatz für ein Schienenfahrzeug, insbesondere für ein Vollbahn-Schienenfahrzeug, umfasst in der Regel ein erstes Rad und ein mittels einer Radsatzwelle damit verbundenes zweites Rad. Erfindungsgemäss umfasst ein solcher Radsatz wenigstens ein auf der Radsatzwelle angeordnetes rekuperatives elektrisches Antriebsmodul, welches dazu eingerichtet ist, wenn in einem Antriebsmodus betrieben, elektrische Energie in Rotationsenergie des Radsatzes umzuwandeln und, wenn in einem Bremsmodus betrieben, Rotationsenergie des Radsatzes in elektrische Energie umzuwandeln. Mit anderen Worten kann ein solches rekuperatives elektrisches Antriebsmodul in einem Antriebsmodus als Motor wirkend die Drehzahl des ersten und des zweiten Rads erhöhen oder konstant halten und in einem Bremsmodus als Generator wirkend die Drehzahl des ersten und des zweiten Rads verringern und gleichzeitig elektrische Energie einem (elektrischen) Verbraucher zur Verfügung stellen.

Mit einem erfindungsgemässen Radsatz wird es möglich ein Schienenfahrzeug sowohl bezüglich Antriebsleistung als auch der Bremsleistung so zu gestalten, dass dieses für sich selber genommen oder in einem quasi-beliebigen Verbund mehrerer solcher Schienenfahrzeuge mit einem hohen Wirkungsgrad betrieben werden kann und gleichzeitig der Wartungsaufwand reduziert werden kann. Damit kann ein betreffend Antriebs- und Bremsleistung optimiertes Antriebssystem für ein Schienenfahrzeug geschaffen werden, welches ein Zusammenstellen solcher Schienenfahrzeuge zu quasi beliebigen Kompositionen unter Beibehaltung des hohen energetischen Wirkungsgrades erlaubt. Bei solchen Kompositionen kann im Normalfall auf den Einsatz konventioneller Lokomotiven oder Triebwagen verzichtet werden, da die Antriebs- und Bremsleistung vollständig von den erfindungsgemässen Radsätzen zur Verfügung gestellt werden kann. Jedoch kann für bestimmte Anwendungen und/oder bestimmte Streckenprofile ein ergänzender Einsatz einer konventionellen Lokomotive bzw. eines konventionellen Triebwagens weiterhin im Bereich der Erfindung vorgesehen sein. In solchen Fällen können jedoch im Normalfall Triebfahrzeuge relativ geringer Leistungsklassen eingesetzt werden.

Durch den Einsatz solcher erfindungsgemässer Radsätze kann zudem auch auf die aus dem Stand der Technik bekannten wartungsintensiven pneumatischen Bremssysteme weitgehend verzichtet werden oder diese können sogar komplett weggelassen werden. Somit kann eine umfassende Quelle von potentiell gesundheitsbelastendem Feinstaub wesentlich reduziert werden.

Eine besonders wartungsarme Variation eines erfindungsgemässen Radsatzes kann erhalten werden, wenn das wenigstens eine rekuperative elektrische Antriebsmodul wenigstens eine Stator-Anordnung und wenigstens eine bezüglich der Stator-Anordnung drehbar angeordnete Rotor-Anordnung aufweist, wobei die Drehachse der Rotor-Anordnung identisch mit der Drehachse der ihr zugeordneten Radsatzwelle ist. Die Rotor-Anordnung und die Stator-Anordnung können dabei mittelbar oder unmittelbar miteinander mechanisch verbunden sein. Somit können Reibungsverluste durch Getriebe bzw. Übersetzungen vermieden und der Wirkungsgrad eines einen solchen Radsatz aufweisenden Antriebssystems unter gewissen Umständen wesentlich erhöht werden.

Ein energetisch besonders effizient einsetzbarer erfindungsgemässer Radsatz kann erzielt werden, wenn die Stator-Anordnung und die Rotor-Anordnung Teile eines Torquemotors sind.

Ein erfindungsgemässer Radsatz weist eine Mehrzahl K (K=1, 2, 3,...) rekuperativer elektrischer Antriebsmodule auf, die auf der Radsatzwelle angeordnet sind. Damit kann mittels Standardkomponenten die Antriebs- und Bremsleistung erhöht werden. Ein weiterer Vorteil der Verwendung einer Mehrzahl K rekuperativer elektrischer Antriebsmodule, die einem Radsatz zugeordnet sind besteht darin, dass dadurch bei Bedarf weitere Komponenten eines Antriebssystems, wie es hierin beschrieben wird (so etwa Energiespeichermodule und/oder Umrichter und/oder Gleichrichter), örtlich relativ nahe beieinander angeordnet werden können, was den Unterhalt eines solchen Antriebssystems (bzw. eines damit ausgerüsteten Schienenfahrzeugs) unter bestimmten Bedingungen wesentlich vereinfachen kann. Ebenso können dadurch elektrische Leiter relativ kurz gehalten werden, was eine Kostenreduktion erlaubt und Übertragungsverluste reduziert.

Ein erfindungsgemässer Radsatz, welcher einen energetisch besonders effizienten Betrieb eines Schienenfahrzeugs bei unterschiedlichen Betriebszuständen ermöglicht, weist ein erstes rekuperatives elektrisches Antriebsmodul mit einem ersten maximalen Wirkungsgrad bei einer ersten Drehzahl (bzw. in einem ersten Drehzahlbereich) und ein zweites rekuperatives elektrisches Antriebsmodul mit einem zweiten maximalen Wirkungsgrad bei einer zweiten Drehzahl (bzw. in einem zweiten Drehzahlbereich) auf, wobei die zweite Drehzahl wenigstens 10% höher ist als die erste Drehzahl ist (bzw. das obere Ende des zweiten Drehzahlbereichs höher liegt als der obere Ende des ersten Drehzahlbereichs und das untere Ende des ersten Drehzahlbereich tiefer liegt als das untere Ende des zweiten Drehzahlbereichs - wobei sich die Drehzahlbereiche überlappen können, dies jedoch nicht zwingend müssen). Solches kann gelten für den ersten und zweiten maximalen Wirkungsgrad während dem Antriebsmodus, welche im Antriebsmodus dem Verhältnis der vom jeweiligen rekuperativen elektrischen Antriebsmodul abgegebenen mechanischen Leistung zu der von ihm aufgenommenen elektrische Leistung entspricht. Alternativ oder zusätzlich kann dies auch für den ersten und zweiten Wirkungsgrad während dem Bremsmodus gelten, welche im Bremsmodus dem Verhältnis der vom jeweiligen rekuperativen elektrischen Antriebsmodul abgegebenen elektrischen Leistung zu der von ihm aufgenommenen mechanischen Leistung entspricht. Dies erlaubt eine Verteilung der Antriebs- bzw. Bremsleistungen mehrere derart ausgelegter rekuperativer elektrischer Antriebsmodule so, dass jeweils das bei der aktuellen Drehzahl des Radsatzes mit dem höchsten Wirkungsgrad betreibbare rekuperative elektrische Antriebsmodul maximal belastet wird. Dadurch kann ein besonders energieeffizienter Betrieb eines Schienenfahrzeugs ermöglicht werden.

Bei einer bevorzugten Variation eines erfindungsgemässen Radsatzes weist das wenigstens eine rekuperative elektrische Antriebsmodul ein erstes mechanisches Befestigungsmittel zur Erzeugung einer mechanischen Wirkverbindung zu einem Schienenfahrzeug auf. Bevorzugt erzeugt ein solches mechanisches Befestigungsmittel eine derartige mechanische Wirkverbindung zu einem Schienenfahrzeug, dass wenigstens Teile des rekuperativen elektrischen Antriebsmoduls drehfest bezüglich der Drehachse der Radsatzwelle ist, d.h. mit der Radsatzwelle nicht mitdreht.

Eine besonders wartungsarme Variation eines Radsatzes kann erzielt werden, wenn dieser wenigstens einen Retarder zur Abbremsung der Rotation des Radsatzes aufweist. Dabei kann erfindungsgemäss ein mittelbares Abbremsen der Räder beispielsweise mittels Abbremsen der Radsatzwelle oder auch unmittelbares Abbremsen der Räder durch direktes Einwirken des wenigstens einen Retarders auf wenigstens ein Rad erfolgen. Bevorzugt wird ein Retarder auf der Radsatzwelle angeordnet und mechanisch mit dieser wirkverbunden. Gemäss einer Variation der Erfindung ist der wenigstens eine Retarder ein hydrodynamischer Retarder. Gemäss einer weiteren Variation der Erfindung ist der wenigstens eine Retarder ein elektrodynamischer Retarder. Ein Retarder - insbesondere ein elektrodynamischer Retarder - kann bevorzugt mit einer Stützbatterie und/oder einer Fahrleitung und/oder mit wenigstens einem rekuperativen elektrischen Antriebsmodul verbunden sein, wodurch eine ausreichende Bremsleistung auch bei Ausfall des Bahnstrom-Netzes und/oder niedrigen Geschwindigkeiten sichergestellt werden kann. Besonders vorteilhaft wird als Stützbatterie ein an wenigstens ein rekuperatives elektrisches Antriebsmodul angeschlossenes Energiespeichermodul verwendet, wie es nachfolgend noch genauer beschrieben wird. Gemäss einer bevorzugten Ausführungsform weist der wenigstens eine Retarder ein zweites mechanisches Befestigungsmittel zur Erzeugung einer mechanischen Wirkverbindung mit einem Schienenfahrzeug auf, insbesondere zur mechanischen Wirkverbindung mit dem Drehgestell eines Schienenfahrzeugs. Insbesondere kann so erfindungsgemäss wenigstens ein Teil wenigstens eines Retarders drehfest bezüglich der Drehachse der Radsatzwelle - bzw. der Räder - angeordnet werden, d.h. mit der Radsatzwelle - bzw. den Rädern - nicht mitdrehend, wie nachfolgend noch genauer erläutert wird.

Gemäss einer Ausführungsform eines erfindungsgemässen Radsatzes ist das wenigstens eine rekuperative elektrische Antriebsmodul wenigstens teilweise in einem Gehäuse angeordnet. Solche Ausführungsformen weisen eine besonders hohe Lebensdauer auf und sind auch unter besonders harschen Umweltbedingungen zuverlässig einsetzbar. Insbesondere kann ein derart eingesetztes Gehäuse bevorzugt staub- und wasserdicht sein. Das wenigstens eine rekuperative elektrische Antriebsmodul kann für bestimmte Anwendungen komplett in einem solchen Gehäuse angeordnet bzw. eingekapselt sein. Falls vorhanden, so können auch mehrere rekuperative elektrische Antriebsmodule gemeinsam in einem Gehäuse angeordnet sein. Alternativ können auch mehrere rekuperative elektrische Antriebsmodule auch jeweils einzeln in separaten Gehäusen angeordnet werden. Alternativ oder in Ergänzung kann ein Gehäuse auch mittels wenigstens einer Rotationsdichtung an eine wenigstens teilweise im Gehäuse angeordnete Rotor-Anordnung anschliessen. Alternativ oder in Ergänzung kann auch wenigstens ein Retarder in einem wie hierin beschriebenen Gehäuse angeordnet werden.

Für bestimmte Anwendungen weist ein Gehäuse wenigstens einen Kühlsystemanschluss zum Anschluss an ein äusseres Kühlsystem zur Kühlung wenigstens eines wenigstens teilweise im Gehäuse angeordneten rekuperativen elektrischen Antriebsmoduls und/oder wenigstens eines wenigstens teilweise im Gehäuse angeordneten Retarders auf. Eine derartige Kühlung weiterer im Gehäuse angeordneter Komponenten ist möglich. Ein Kühlsystemanschluss kann beispielsweise ein fluidischer Verbinder für Kühlflüssigkeit sein. Gute Ergebnisse können erzielt werden, wenn mehrere im Gehäuse angeordnete Komponenten - die Komponenten ausgewählt aus einer Gruppe umfassend rekuperatives elektrisches Antriebsmodul und (elektrodynamischer) Retarder, Scheibenbremse und Steuerung (z.B. lokale Antriebssteuerung) - an demselben oder an unterschiedlichen Kühlsystemen angeschlossen sind. Alternativ oder in Ergänzung kann ein rekuperatives elektrisches Antriebsmodul auch ein passives Kühlsystem aufweisen, so z.B. Kühlrippen.

Um während einem Bremsvorgang das wirkende Bremsmoment wenigstens bei bestimmten Drehzahlen (bzw. Drehzahlbereichen) des Radsatzes zu verstärken - insbesondere bei niedrigen Drehzahlen - und/oder um eine zuverlässige Feststellung des Radsatzes bei Stillstand eines Schienenfahrzeugs zu gewährleisten, kann gemäss einer Variation eines Radsatzes ein solcher wenigstens eine Scheibenbremse mit einer auf der Radsatzwelle angeordneten Bremsscheibe aufweisen. Eine Scheibenbremse muss nicht zwingend zwischen dem ersten und dem zweiten Rad auf der Radsatzwelle angeordnet werden. Alternativ kann eine Scheibenbremse auch auf einer Radscheibe eines Rads angeordnet sein. Im Vergleich zu konventionellen Radsätzen kann bei einem erfindungsgemässen Radsatz eine Scheibenbremse kleiner dimensioniert werden, wodurch die Masse und Kosten reduziert werden können.

Eine besonders wartungsarme erfinderische Radsatzwelle kann erzielt werden, wenn die wenigstens eine Scheibenbremse einen elektromechanischen und/oder einen hydraulischen Aktuator zum Betätigen eines Bremssattels aufweist. Ein mit einem solchen Radsatz ausgestattetes Schienenfahrzeug kann im Wesentlichen unabhängig von einem konventionellen pneumatischen Bremssystem betrieben werden - bzw. kann in einer mit solchen Radsätzen ausgestatteter Komposition von Schienenfahrzeugen komplett auf ein pneumatisches Bremssystem verzichtet werden. Gemäss einer Ausführungsform der Erfindung kann die für die Betätigung eines solchen Aktuators notwendige elektrische Energie wenigstens zeitweise von einem rekuperativen elektrischen Antriebsmodul oder - falls vorhanden - einem an wenigstens ein rekuperatives elektrisches Antriebsmodul angeschlossenes Energiespeichermodul bezogen werden.

Alternativ oder in Ergänzung kann ein erfindungsgemässer Radsatz wenigstens eine formschlüssige Feststellbremse aufweisen, die wenigstens teilweise mittels einer formschlüssigen Verbindung ein Rotieren des Radsatzes relativ zu einer zugeordneten Schiene beschränkt. Somit kann eine ausreichende Rollsicherung eines Schienenfahrzeugs - bzw. eines wenigstens ein mit einem entsprechenden erfindungsgemässen Radsatz ausgestatteten Verbunds von Schienenfahrzeugen - gewährleistet werden.

Die vorliegende Erfindung ist ausserdem auf ein Drehgestell gerichtet, das wenigstens einen Drehgestellrahmen und wenigstens einen mit dem Drehgestellrahmen mechanisch verbundenen erfindungsgemässen Radsatz, wie er hierin beschrieben ist, aufweist. Ein mit einem solchen Drehgestell ausgestattetes Schienenfahrzeug kann besonders effizient betrieben werden. Dies trifft insbesondere für solche Variationen eines erfindungsgemässen Drehgestells zu, bei denen sämtliche Radsätze des Drehgestells Radsätze gemäss der hierin beschriebenen Erfindung sind.

Ein besonders wartungsfreundliches Drehgestell kann erzielt werden, wenn wenigstens ein an einem Radsatz angeordnetes rekuperatives elektrisches Antriebsmodul über wenigstens einen ersten lösbaren elektrischen Verbinder und/oder mechanischen Verbinder mit einem am Drehgestell angeordneten elektrischen System trennbar elektrisch verbunden ist. Eine solche elektrische Trennstelle ermöglicht einen relativ einfachen und schnellen Austausch eines kompletten erfindungsgemässen Radsatzes für Unterhalt und Reparatur. Durch die Verwendung standardisierter trennbarer mechanischer und/oder elektrischer (bzw. elektronischer) Schnittstellen, kann bei Bedarf ein einfacher Austausch eines erfindungsgemässen Radsatzes erfolgen. Dadurch können Unterhalt und/oder Reparatur und/oder Um-/Nachrüsten (bspw. Erhöhung der Antriebs- und/oder Bremsleistung) eines erfindungsgemässen Radsatzes (bzw. Drehgestells) wesentlich beschleunigt und vereinfacht werden, was die Stillstandzeiten von Schienenfahrzeugen verkleinert und einen effizienteren Betrieb ermöglicht.

Eine Ausführungsform eines erfindungsgemässen Drehgestells weist wenigstens ein an einem Radsatz angeordneten Retarder wenigstens einen zweiten lösbaren elektrischen Verbinder auf, der mit einem am Drehgestell angeordneten elektrischen System trennbar elektrisch verbunden ist. Eine solche elektrische Trennstelle ermöglicht ebenfalls einen relativ einfachen und schnellen Austausch eines kompletten erfindungsgemässen Radsatzes für Unterhalt und Reparatur.

Ein besonders leistungsstarkes Drehgestell kann erzielt werden, wenn wenigstens ein rekuperatives elektrisches Antriebsmodul und/oder wenigstens ein an einem Radsatz angeordneter Retarder über wenigstens einen lösbaren fluidischen Verbinder mit einem am Drehgestell angeordneten äusseren Kühlsystem trennbar fluidisch verbunden ist.

Gemäss einer Ausführungsform eines erfindungsgemässen Radsatzes ist wenigstens ein an einem Radsatz angeordnetes rekuperatives elektrisches Antriebsmodul und/oder ein an einem Radsatz angeordneter Retarder über wenigstens einen lösbaren mechanischen Verbinder mit dem Drehgestellrahmen trennbar mechanisch verbunden. Dadurch kann ein einfacher Austausch eines Radsatzes für Reparatur und Unterhalt gewährleistet werden.

Die vorliegende Erfindung ist ausserdem auf ein Schienenfahrzeug gerichtet umfassend eine Mehrzahl N von erfindungsgemässen Radsätzen wie sie hierin beschrieben sind. Eine energetisch besonders effizient zu betreibende Ausführungsform eines erfinderischen Schienenfahrzeugs, welche sich ausserdem durch einfache Wartung und Reparatur auszeichnet kann erzielt werden, wenn sämtliche N Radsätze des Schienenfahrzeugs erfindungsgemässe Radsätze wie hierin beschrieben sind. Besonders gute Ergebnisse können erzielt werden, wenn das Schienenfahrzeug wenigstens ein erfindungsgemässes Drehgestell wie hierin beschrieben aufweist.

Die vorliegende Erfindung ist ausserdem auf einen Verbund von Schienenfahrzeugen umfassend mehrere erfindungsgemässe Schienenfahrzeuge mit erfindungsgemässen Radsätzen wie hierin beschrieben gerichtet. Eine in Bezug auf die Wartung, Reparatur und Ersatzteilhaltung besonders vorteilhafte Ausführungsform eines erfindungsgemässen Verbunds von Schienenfahrzeugen kann erzielt werden, wenn im Wesentlichen sämtliche Radsätze des Verbunds identische erfindungsgemässe Radsätze wie hierin beschrieben sind. Somit können die Betriebskosten sowohl eines einzelnen Schienenfahrzeugs, als auch eines Verbunds von Schienenfahrzeugen erheblich gesenkt werden.

Die vorliegende Erfindung ist ausserdem auf ein Antriebssystem für ein Schienenfahrzeug mit wenigstens einem erfindungsgemässen Radsatz wie hierin beschrieben gerichtet, wobei das Antriebssystem wenigstens eine lokale Antriebssteuerung umfasst, welche im Antriebsmodus die Antriebsleistung wenigstens eines rekuperativen elektrischen Antriebsmoduls wenigstens dieses Schienenfahrzeugs überwacht und bei Abweichung von einem Antriebs-Sollwert die Antriebsleistung wenigstens eines rekuperativen elektrischen Antriebsmoduls anpasst. Alternativ oder in Ergänzung kann die wenigstens eine lokale Antriebssteuerung im Bremsmodus die Bremsleistung wenigstens eines rekuperativen elektrischen Antriebsmoduls wenigstens dieses Schienenfahrzeugs überwachen und bei Abweichung von einem Brems-Sollwert die Bremsleistung wenigstens eines rekuperativen elektrischen Antriebsmoduls anpassen.

Gemäss einer Ausführungsform eines erfindungsgemässen Antriebssystems umfasst dieses eine Rückspeisungseinrichtung zur Einspeisung wenigstens eines Teils der von wenigstens einem rekuperativen elektrischen Antriebsmodul im Bremsmodus erzeugten elektrischen Energie in eine Fahrleitung (bzw. ein zugehöriges Bahnstromsystem). Eine Fahrleitung kann bespielweise eine Oberleitung sein. Alternativ oder in Ergänzung kann die Rückspeisungseinrichtung eines erfindungsgemässen Antriebssystems auch so eingerichtet sein, dass wenigstens ein Teil der von wenigstens einem rekuperativen elektrischen Antriebsmodul erzeugten elektrischen Energie wenigstens teilweise über eine zentrale Rückspeisungseinrichtung eines Verbunds von Schienenfahrzeugen in eine Fahrleitung eingespeist werden kann. Dazu können mehrere rekuperative elektrische Antriebsmodule eines Antriebssystems eines Schienenfahrzeugs und/oder eines Verbunds von Schienenfahrzeugen elektrisch verbunden sein. Eine solche Rückspeisungseinrichtung kann beispielsweise die Rückspeisungseinrichtung einer elektrischen oder dieselelektrischen Lokomotive mit Nutzbremse sein. Ausführungsformen eines erfindungsgemässen Antriebssystems mit Rückspeisungseinrichtung können also wenigstens zeitweise in der Art einer sogenannten Nutzbremse betrieben werden.

Alternativ oder in Ergänzung kann ein erfindungsgemässes Antriebssystem eine Leistungssteuerung aufweisen, welche wenigstens einen Teil der von wenigstens einem rekuperativen elektrischen Antriebsmodul im Bremsmodus erzeugten elektrischen Energie einem elektrischen Verbraucher zur Verfügung stellt. Dazu kann ein erfindungsgemässes Antriebssystem bevorzugt einen Umrichter und/oder Gleichrichter aufweisen. Gemäss einer Ausführungsform umfasst das erfindungsgemässe Antriebssystem eine Leistungssteuerung, welche von wenigstens einem rekuperativen elektrischen Antriebsmodul erzeugte oder (falls vorhanden) in einem Energiespeichermodul gespeicherte elektrische Energie einem Verbraucher zur Verfügung stellt. Verbraucher können insbesondere eine Klimaanlage (Heizung, Lüftung, Kühlung, Entfeuchtung) und/oder eine Beleuchtungseinrichtung und/oder persönliche Verbraucher von Passagieren (z.B. Netz- und Ladegeräte für persönliche elektrische Geräte wie Mobiltelefone oder tragbare Computer) und/oder eine Toilettenanlage sein. Ein Verbraucher kann im selben Schienenfahrzeug wie ein die elektrische Energie erzeugendes rekuperatives elektrisches Antriebsmodul angeordnet sein. Alternativ oder in Ergänzung kann bei Verwendung eines mit einem erfindungsgemässen Antriebssystem ausgestatteten Schienenfahrzeugs in einem Verbund auch wenigstens ein in einem anderen Schienenfahrzeug des Verbunds angeordneter Verbraucher mit elektrischer Energie versorgt werden.

Eine bevorzugte Ausführungsform eines erfindungsgemässen Antriebssystems weist wenigstens ein Energiespeichermodul zur Speicherung wenigstens eines Teils der von wenigstens einem rekuperativen elektrischen Antriebsmodul im Bremsmodus erzeugen elektrischen Energie auf. Gemäss einer Ausführungsform der Erfindung ist jedem mit einem rekuperativen elektrischen Antriebsmodul ausgestatteten Radsatz genau ein Energiespeichermodul zugeordnet. Alternativ oder in Ergänzung können einem solchen erfindungsgemässen Radsatz auch wenigstens zwei Energiespeichermodule zugeordnet sein. Eine solche Ausführungsform kann vorteilhaft sein, um etwa die Folgen im Falle eines Ausfalls eines Energiespeichermoduls reduzieren zu können. Bei einer solchen Ausführungsform eines Antriebssystems können einem Energiespeichermodul insbesondere auch mehrere rekuperative elektrische Antriebsmodule zugeordnet werden. Ausführungsformen eines erfindungsgemässen Antriebssystems mit Energiespeichermodul können also wenigstens zeitweise in der Art einer Nutzbremse auch ohne Rückspeisung in ein Bahnstromsystem betrieben werden - etwa bei einer zeitweisen Überlast in einem Bahnstromsystem. Ein Energiespeichermodul kann im/am selben Schienenfahrzeug wie ein zugeordnetes rekuperatives elektrisches Antriebsmodul angeordnet sein. Alternativ kann ein Energiespeichermodul jedoch auch im/an einem anderen Schienenfahrzeug wie ein zugeordnetes rekuperatives elektrisches Antriebsmodul angeordnet sein.

Gute Ergebnisse können erzielt werden, wenn das Antriebssystem ein Energiespeichermodul umfasst, das wenigstens ein Energiespeicherelement aufweist, wobei das Energiespeicherelement ausgewählt sei aus der Gruppe umfassend Batterie, Superkondensator und Schwungrad. Andere Arten von Energiespeicherelementen sind erfindungsgemäss möglich.

Das Energiespeichermodul kann bei Bedarf einen Gleichrichter und/oder einen Wechselrichter aufweisen. Dadurch kann bei Bedarf einem rekuperativen elektrischen Antriebsmodul elektrische Energie zugeführt werden (wie nachfolgend beschrieben wird) und/oder elektrische Energie über eine Rückspeisungseinrichtung einem Bahnstromsystem zugeführt werden und/oder elektrische Energie einem Verbraucher im Schienenfahrzeug zur Verfügung gestellt werden.

Bevorzugt verfügt ein Energiespeichermodul über standardisierte trennbare mechanische und/oder elektrische (bzw. elektronische) Schnittstellen, welche bei Bedarf einen einfachen Austausch des Energiespeichermoduls ermöglichen. Dadurch können Unterhalt und/oder Reparatur und/oder Um-/Nachrüsten (bspw. Erhöhung der Speicherkapazität) eines erfindungsgemässen Antriebssystems wesentlich beschleunigt und vereinfacht werden, was die Stillstandzeiten von Schienenfahrzeugen verkleinert und einen effizienteren Betrieb ermöglicht.

Gemäss einer besonderen Ausführungsform der Erfindung sind jeweils die rekuperativen elektrischen Antriebsmodule der erfindungsgemässen Radsätze eines Drehgestells eines Schienenfahrzeugs einem gemeinsamen einzelnen Energiespeichermodul oder einer gemeinsamen Gruppe von Energiespeichermodulen zugeordnet. Bevorzugt wird ein solches Energiespeichermodul oder eine solche gemeinsame Gruppe von Energiespeichermodulen an demselben Drehgestell wie das zugeordnete wenigstens eine rekuperative elektrische Antriebsmodul angeordnet.

In einer weiteren Ausführungsform der Erfindung sind jeweils alle rekuperativen elektrischen Antriebsmodule der erfindungsgemässen Radsätze eines Schienenfahrzeugs einem Energiespeichermodul oder einer Gruppe von Energiespeichermodulen zugeordnet.

Alternativ oder in Ergänzung können erfindungsgemäss wenigstens einzelne Schienenfahrzeuge eines Verbunds von Schienenfahrzeugen, über Energiespeichermodule mit einer im Vergleich zu den in den restlichen Schienenfahrzeugen enthaltenen Energiespeichermodulen erhöhten Energiespeicherkapazität verfügen und wenigstens einen Teil der von rekuperativen elektrischen Antriebsmodulen von mit dem erfindungsgemässen Antriebssystem ausgerüsteten Schienenfahrzeugen erzeugten elektrischen Energie in diesen Energiespeichermodule gespeichert wird. Eine solche Ausgestaltung eines erfindungsgemässen Antriebssystems kann für bestimmte Anwendungen vorteilhaft sein, da grössere Energiespeichermodule im Allgemeinen kostengünstiger herstellbar als mehrere kleinere Energiespeichermodule mit derselben Gesamtspeicherkapazität sind.

Gemäss einer Ausführungsform eines erfindungsgemässen Antriebssystems verfügt dieses über eine Leistungssteuerung, welche wenigstens einen Teil der im wenigstens einen Energiespeichermodul gespeicherten elektrischen Energie einem elektrischen Verbraucher zur Verfügung stellt.

Gemäss einer bevorzugten Ausführungsform eines erfindungsgemässen Antriebssystems verfügt dieses über eine Antriebssteuerung, welche elektrische Energie von einer Fahrleitung und/oder von wenigstens einem Energiespeichermodul wenigstens einem rekuperativen elektrischen Antriebsmodul eines erfindungsgemässen Radsatzes im Antriebsmodus zuführt. Dadurch kann ein Schienenfahrzeug oder ein Verbund mehrerer Schienenfahrzeuge Beschleunigt werden oder eine vorgegebene Fahrgeschwindigkeit kann beibehalten werden.

Gemäss einer besonders zuverlässig betreibbarer Ausgestaltung eines erfindungsgemässen Antriebssystems umfasst dieses eine Dissipationsvorrichtung, welche wenigstens einen Teil der von wenigstens einem rekuperativen elektrischen Antriebsmodul eines erfindungsgemässen Radsatzes im Bremsmodus erzeugten elektrischen Energie in thermische Energie umwandelt. Auf diese Weise können elektrische Leistungsspitzen während einem Bremsvorgang bei Bedarf geglättet werden und eine ausreichende Bremsleistung auch dann sichergestellt werden, wenn die von wenigstens einem rekuperativen elektrischen Antriebsmodul eines erfindungsgemässen Radsatzes erzeugte elektrische Energie nicht oder nicht vollständig in eine Fahrleitung und/oder ein Energiespeichermodul abgegeben werden kann. Dies kann beispielsweise dann der Fall sein, wenn die Bremsleistung die Aufnahmekapazität einer Fahrleitung oder eines Energiespeichermoduls (bzw. einer Gruppe von Energiespeichermodule) übersteigt. Eine solche Situation kann etwa bei längeren Gefällen oder bei Notbremsungen oder bei Überkapazitäten im Bahnstromsystem auftreten. Entsprechende Ausführungsformen eines erfindungsgemässen Antriebssystems mit Dissipationsvorrichtung können also wenigstens zeitweise in der Art einer Widerstandsbremse betrieben werden.

Die Dissipationsvorrichtung kann insbesondere einen ohmschen Lastwiderstand aufweisen, welcher die aufgenommene elektrische Leistung in thermische Energie (Wärme) umgewandelt. Ebenso kann die Dissipationsvorrichtung Mittel zur Abgabe der erzeugten thermischen Energie an die Umgebung aufweisen, insbesondere mittels Wärmeleitung und Abstrahlung elektromagnetischer Wellen, wie nachfolgend noch genauer erläutert wird. Ebenso kann die Dissipationsvorrichtung Mittel zur wenigstens kurzzeitigen Speicherung wenigstens eines Teils der erzeugten thermischen Energie aufweisen, wie nachfolgend noch genauer erläutert wird.

Gemäss einer Ausführungsform umfasst die Dissipationsvorrichtung eine thermische Masse, die wenigstens teilweise aus einem Material mit einer hohen spezifischen Wärmekapazität besteht. Die thermische Masse kann insbesondere ein Festkörper und/oder eine Flüssigkeit und/oder ein Salz mit einer sich im Bereich der zu erwartenden Betriebstemperaturen änderndem Aggregatszustand sein. Die thermische Masse kann direkt als ohmscher Widerstand wirken und/oder die thermische Masse kann thermisch mit einem ohmschen Widerstand verbunden sein, in welchem die von wenigstens einem rekuperativen elektrischen Antriebsmodul erzeugte elektrische Energie in thermische Energie umgewandelt wird.

Gute Resultate können erzielt werden, wenn die Dissipationsvorrichtung wenigstens eine Kühlrippe aufweist. Dadurch kann thermische Energie besonders effizient abgestrahlt werden und die Bremsleistung somit vergrössert werden. Thermische Energie kann insbesondere auch an ein Kühlmedium abgegeben werden, z.B. an Umgebungsluft (Atmosphäre) oder an eine Flüssigkeit (Kühlflüssigkeit, z.B. Öl).

Erfindungsgemäss kann ein Antriebssystem auch Mittel zur Erhöhung der Wärmeübertragung mittels erzwungener Konvektion im Bereich einer Dissipationsvorrichtung bzw. von Rippen aufweisen, etwa fluiddynamische Massnahmen zur Umleitung der ein Schienenfahrzeug während der Fahrt umströmenden Luft. Ebenso ist die Verwendung eines Gebläses/Lüfters denkbar, so etwa eines elektrisch betriebenen Lüfters. Eine wenigstens teilweise luftgekühlte Dissipationsvorrichtung oder wenigstens Teile davon kann somit mit Lüftern versehen oder auch eigenbelüftet sein.

Gemäss einer Ausführungsform eines erfindungsgemässen Antriebssystems ist wenigstens ein Teil der Dissipationsvorrichtung im Bereich des Untergestells eines Schienenfahrzeugs angeordnet. Falls das Schienenfahrzeug wenigstens ein Drehgestell aufweist, so kann eine Dissipationsvorrichtung auch bevorzugt im Bereich des Drehgestells oder direkt am Drehgestell angeordnet werden. Gemäss einer Ausführungsform der Erfindung kann wenigstens ein Teil der Dissipationsvorrichtung im Bereich eines Dachs eines Schienenfahrzeugs angeordnet werden (bzw. im Bereich der Oberseite des Schienenfahrzeugs), wodurch bei gewissen Arten von Schienenfahrzeugen eine effiziente Ableitung erwärmter Luft möglich wird.

Gemäss einer für bestimmte Arten von Schienenfahrzeugen vorteilhaften Ausgestaltung eines erfindungsgemässen Antriebssystems ist wenigstens ein Teil der Dissipationsvorrichtung an oder auf einer Radsatzwelle angeordnet und mit dieser rotatorisch verbunden. Auf diese Weise kann während einem Bremsvorgang aufgrund der durch die Rotation erzeugten erzwungenen Konvention ein besserer Wärmetransfer an Umgebung erzeugt werden. Eine solche Ausführungsform kann insbesondere bei der nachträglichen Ausrüstung von Schienenfahrzeugen mit einem erfindungsgemässen Antriebssystem vorteilhaft sein, da bei solchen die Radsatzwellen und umliegenden Bauteile wegen den ansonsten montierten Scheibenbremsen in den meisten Fällen bereits so eingerichtet sind, dass im Bereich der Radsatzwellen erzeugte thermische Energie keine Beschädigung des Schienenfahrzeugs bewirkt. Gemäss einer für bestimmte Schienenfahrzeuge geeigneten Ausführungsform eines erfindungsgemässen Antriebssystems werden auf wenigstens einer Radsatzwelle wenigstens ein rekuperatives elektrisches Antriebsmodul und wenigstens ein Teil einer Dissipationsvorrichtung angeordnet. Gemäss einer weiteren Ausführungsform eines erfindungsgemässen Antriebssystems wird wenigstens ein rekuperatives elektrisches Antriebsmodul auf einer ersten Radsatzwelle angeordnet und wenigstens eine mit dem rekuperativen elektrischen Antriebsmodul wirkverbundene Dissipationsvorrichtung wird auf einer zweiten, von der ersten Radsatzwelle verschiedenen, Radsatzwelle angeordnet. Eine solche Ausführungsform kann vorteilhaft sein um rekuperative elektrische Antriebsmodule vor thermischer Belastung zu schützen und auch, um die Abgabe der thermischen Energie von der Dissipationsvorrichtung zu maximieren.

Gemäss einer für bestimmte Schienenfahrzeuge vorteilhaften Ausführungsform eines erfindungsgemässen Antriebssystems ist wenigstens ein Teil der Dissipationsvorrichtung Teil einer Bremsscheibe einer Scheibenbremse. Dadurch kann ein höherer Grad von Funktionsintegration erzielt und gegebenenfalls Gewicht und Kosten gesenkt werden.

Ein energetisch besonders effizientes erfinderisches Antriebssystem kann erzielt werden, wenn dieses eine lokale Antriebssteuerung aufweist, welche im Bremsmodus die Bremsleistung wenigstens eines rekuperativen elektrischen Antriebsmoduls und wenigstens eines Retarders und/oder wenigstens einer Scheibenbremse so regelt, dass bei vorgegebenem Soll-Bremswert die Bremsleistung des rekuperativen elektrischen Antriebsmoduls eines erfindungsgemässen Radsatzes maximal ist. Somit kann eine maximale Rückgewinnung der kinetischen Energie erzielt werden, ohne dass die wirkende Bremskraft die maximal zwischen Gleis und Radsatz zur Verfügung stehende Haftreibungskraft überschreitet. Alternativ oder in Ergänzung erfolgt eine Reduktion des Bremsmoments in Abhängigkeit von der Drehzahl, um die maximale Haftreibung nicht zu überschreiten. Gute Ergebnisse können erzielt werden, wenn die eine lokale (oder globale) Antriebssteuerung die Bremsleistung einer oder mehrerer Scheibenbremsen (falls vorhanden) in erster Priorität vermindert, die Leistung eines oder mehrerer Retarders (falls vorhanden) in zweiter Priorität vermindert und den Bremswiderstand eines oder mehrerer elektrischer Antriebsmodule in dritter Priorität vermindert.

Gemäss einer Ausführungsform eines erfindungsgemässen Antriebssystems erstreckt sich dieses über einen Verbund mehrerer Schienenfahrzeuge, wobei wenigstens zwei Schienenfahrzeuge jeweils wenigstens einen erfindungsgemässen Radsatz aufweisen.

Gemäss einer bevorzugten Ausführungsform eines erfindungsgemässen Antriebssystems umfasst diese eine globale Bremssteuerung, welche die Antriebsleistung und/oder die Bremsleistung der rekuperativen elektrischen Antriebsmodule einer Mehrzahl von mit einem erfindungsgemässen Antriebssystem ausgestatteten Schienenfahrzeuge überwacht und regelt.

In Ausführungsformen eines erfindungsgemässen Antriebssystems, welche wenigstens zwei Komponenten - ausgewählt aus der Gruppe von Energiespeichermodul, Rückspeisungseinrichtung und Dissipationsvorrichtung aufweisen - kann bei Bedarf auch ein erster Teil der von wenigstens einem rekuperativen elektrischen Antriebsmodul eines erfindungsgemässen Radsatzes erzeugten elektrischen Energie in ein Energiespeichermodul und/oder gegebenenfalls ein zweiter Teil über die Rückspeisungseinrichtung in ein Bahnstromsystem eingespeist werden und/oder gegebenenfalls ein dritter Teil über eine Dissipationsvorrichtung in Wärme umgewandelt werden. Die jeweiligen Anteile eines ersten Teils, eines zweiten Teils und eines dritten Teils an der gesamthaft erzeugten elektrischen Energie werden vorteilhaft von einer lokalen oder globalen Antriebssteuerung bestimmt. Die Bestimmung der jeweiligen Anteile erfolgen vorzugsweise in Abhängigkeit von der aktuellen elektrischen Leistung des wenigstens einen rekuperativen elektrischen Antriebsmoduls und oder der aktuellen Aufnahmefähigkeit des Bahnstromsystems (insbesondere die aktuelle Spannungshöhe im Bahnstromsystem) und/oder dem Ladestand und der Ladekapazität wenigstens eines Energiespeichermoduls und/oder der von einer Dissipationsvorrichtung aktuell konsumierbaren elektrischen Leistung. Ebenso können dazu Informationen zu den aktuellen Leistungen anderer rekuperativer elektrischer Antriebsmodule eines erfindungsgemässen Radsatzes und/oder aktuelle Leistungsdaten einer möglichen Nutzbremse einer (falls vorhandenen) Lokomotive und/oder Informationen zu einem aktuellen Streckenprofil (insbesondere das Höhenprofil und die Distanz zu bevorstehenden Haltestellen) ausgewertet werden.

Ein weiterer Vorteil eines erfindungsgemässen Antriebssystems besteht darin, dass ein mit einem solchen Antriebssystem ausgerüstetes Schienenfahrzeug so ausgebildet sein kann, dass es wenigstens kurzzeitig auch selbständig Geschwindigkeit aufnehmen und abbremsen kann. Dies insbesondere dann, wenn es über ein wie hierin beschriebenes Energiespeichermodul verfügt und wenigstens ein rekuperative elektrische Antriebsmodul als Elektromotor zum Antrieb eines Schienenfahrzeugs mittels vom Energiespeichermodul zur Verfügung gestellter elektrischer Energie ausgebildet ist. Solche Ausführungsformen sind insbesondere im Rangierbetrieb vorteilhaft, da sie eine Vielzahl zusätzlicher Freiheitsgrade bzw. Rangierstrategien möglichen und somit sowohl eine signifikante Reduktion der Rangierdauer als auch der benötigten Rangierlokomotiven ermöglichen. Ebenso kann durch die Verwendung eines mit einem solchen Antriebssystem ausgerüsteten Schienenfahrzeugs gegebenenfalls auf einen Ablaufberg verzichtet werden.

Gemäss einer bevorzugten Ausgestaltung eines erfindungsgemässen Antriebssystems, erstreckt sich das Antriebssystem über einen Verbund mehrerer Schienenfahrzeuge, wobei wenigstens zwei Schienenfahrzeuge erfinderische Radsätze wie hierin beschrieben aufweisen. Insbesondere kann sich ein erfindungsgemässes Antriebssystem auf einen Verbund ausschliesslich Schienenfahrzeuge umfassend jeweils wenigstens einen erfinderischen Radsatz erstrecken, wobei ein Verbund zusätzlich auch ein herkömmliches Triebfahrzeug wie eine Lokomotive oder ein Triebwagen umfassen kann.

Gemäss einer Ausführungsform eines erfindungsgemässen Antriebssystems umfasst dieses eine globale Antriebssteuerung welche die die Antriebsleistung und/oder die Bremsleistung der rekuperativen elektrischen Antriebsmodule erfindungsgemässer Radsätze einer Mehrzahl von mit einem erfindungsgemässen Antriebssystem ausgestatteten Schienenfahrzeugen überwacht und regelt. Gemäss einer Ausführungsform eines solchen erfindungsgemässen Antriebssystems kann eine globale Antriebssteuerung insbesondere auch die Verteilung der von rekuperativen elektrischen Antriebsmodulen erzeugten elektrischen Energie auf eines oder mehrere Energiespeichermodule oder eine oder mehrere Dissipationsvorrichtungen oder eine oder mehrere Rückspeisungseinrichtungen regeln. Ebenso kann eine solche globale Antriebssteuerung die Verteilung der an Verbraucher gelieferten Energie steuern, bzw. die an die Verbraucher abgegebene Leistung regeln. Insbesondere kann eine globale Antriebssteuerung auch ein Blending zwischen wenigstens einem rekuperativen elektrischen Antriebsmodul und/oder wenigstens einem Retarder und/oder wenigstens einer Scheibenbremse steuern. Die vorgängig beschriebenen Funktionen einer globalen Antriebssteuerung können auch wenigstens teilweise von einer (insbesondere wie hierin beschriebenen) lokalen Antriebssteuerung ausgeführt werden.

Anhand der in den nachfolgenden Figuren gezeigten Ausführungsbeispielen und der dazugehörigen Beschreibung werden Aspekte der Erfindung näher erläutert. Es zeigen schematisch:
- Fig. 1: eine erste Ausführungsform eines erfindungsgemässen Radsatzes in einer perspektivischen Ansicht von oben;
- Fig. 2: eine zweite Ausführungsform eines erfindungsgemässen Radsatzes in einer perspektivischen Ansicht von oben;
- Fig. 3: eine dritte Ausführungsform eines erfindungsgemässen Radsatzes in einer perspektivischen Ansicht von oben;
- Fig. 4: eine vierte Ausführungsform eines erfindungsgemässen Radsatzes in einer perspektivischen Ansicht von oben;
- Fig. 5: eine Ausführungsform eines erfindungsgemässen Drehgestells in einer perspektivischen Ansicht von oben.

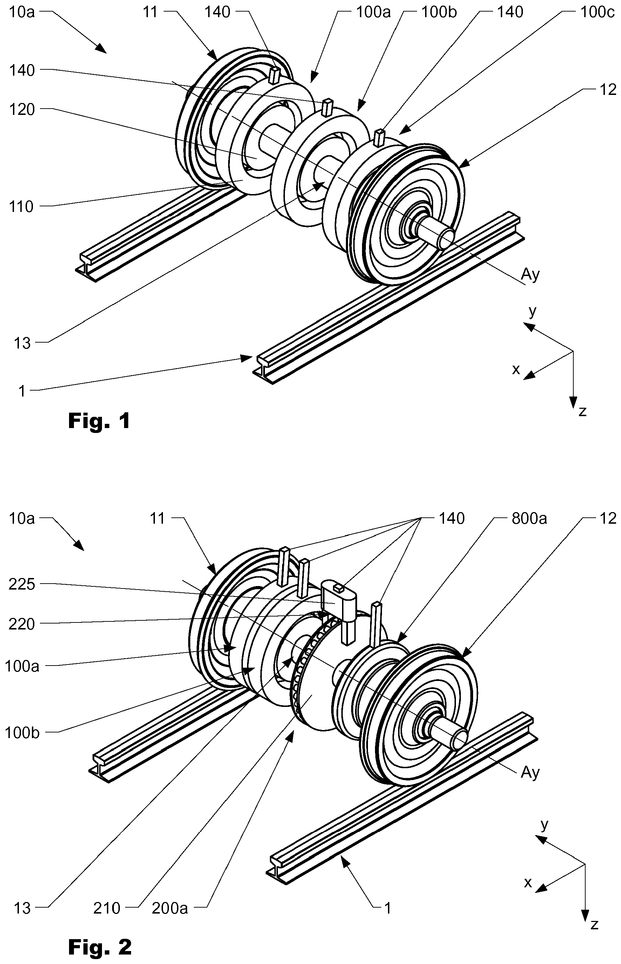

**Figur 1** zeigt schematisch eine erste Ausführungsform eines erfindungsgemässen Radsatzes 10a für ein Vollbahn-Schienenfahrzeug umfassend ein erstes Rad 11 und ein mittels einer Radsatzwelle 13 damit verbundenes zweites Rad 12, angeordnet auf Schienen 1. Auf der Radsatzwelle 13 angeordnet sind drei rekuperative elektrische Antriebsmodule 100a-c. Die rekuperativen elektrischen Antriebsmodule 100a-c sind jeweils dazu eingerichtet, dass sie - wenn in einem Antriebsmodus betrieben werden - elektrische Energie in Rotationsenergie des Radsatzes 10a umzuwandeln und - wenn in einem Bremsmodus betrieben werden - Rotationsenergie des Radsatzes 10a in elektrische Energie umzuwandeln. Dadurch kann ein mit einem solchen Radsatz ausgerüstetes Schienenfahrzeug im Antriebsmodus mittels des erfindungsgemässen Radsatzes beschleunigt oder wenigstes auf einer konstanten Geschwindigkeit gehalten werden und in einem Bremsmodus abgebremst werden. Die rekuperativen elektrischen Antriebsmodule 100a-c umfassen Torquemotoren, welche jeweils eine Stator-Anordnung 110 und eine bezüglich der Stator-Anordnung 110 drehbar angeordnete Rotor-Anordnung 120 aufweisen, wobei die Drehachse der Rotor-Anordnung 120 identisch mit der Drehachse Ay der ihr zugeordneten Radsatzwelle 13 ist. Ausserdem weisen die rekuperativen elektrischen Antriebsmodule 100a-c jeweils mechanische Befestigungsmittel 140 zur Erzeugung einer mechanischen Wirkverbindung zu einem Schienenfahrzeug (nicht dargestellt) auf.

Die **Fig. 2** zeigt schematisch eine weitere Ausführungsform eines erfindungsgemässen Radsatzes 10. Dieser umfasst zwei rekuperative elektrische Antriebsmodule 100a, 100b welche unmittelbar auf der Radsatzwelle 13 angeordnet sind. Ebenso umfasst der Radsatz 10a einen elektrodynamischen Retarder 800a der ebenfalls auf der Radsatzwelle 13 angeordnet ist und während einem Bremsvorgang des Radsatzes ein zusätzliches Bremsmoment erwirkt. Parallel dazu ist auf der Radsatzwelle eine Scheibenbremse 200a angeordnet, deren Bremsscheibe 210 drehfest mit der Radsatzwelle 13 verbunden ist. Die Scheibenbremse 200a weist einen elektromechanischen Aktuator 225, der zur Betätigung des Bremssattels 220, bzw. dem Erzeugen eines Bremsmoments dient. In einem idealen Betriebszustand wird ein mit einem solchen Radsatz 10a ausgestattetes Schienenfahrzeug grösstenteils mittels der rekuperativen elektrischen Antriebsmodule 100a, 100b im Bremsmodus abgebremst, wobei der elektrodynamische Retarder 800a bei Bedarf (bspw. bei Notbremsungen) ein zusätzliches Bremsmoment aufbringen kann. Somit kann die während einem Bremsvorgang abnehmende kinetische Energie eines Schienenfahrzeugs mittels der rekuperativen elektrischen Antriebsmodule 100a, 100b in elektrische Energie umgewandelt und entweder in einem im Schienenfahrzeug mitgeführten Energiespeichermodul (nicht dargestellt) zwischengespeichert oder beispielsweise in eine Fahrleitung eines Bahnstromsystems (nicht dargestellt) eingespeist werden. Soll ein Schienenfahrzeug beschleunigt werden, so können die rekuperativen elektrischen Antriebsmodule im Antriebsmodus elektrische Energie aufnehmen und zur Beschleunigung der Rotation der Radsatzwelle 13 und der Räder 11, 12 verwenden. Durch den Einsatz des elektrodynamischen Retarders 800a kann ein zusätzliches Bremsmoment erzeugt werden, ohne dass der von konventionellen Bremsen bekannte Abrieb von Bremsbelägen entsteht. Ein solcher Retarder 800a, 800b arbeitet deshalb ebenso wie die rekuperativen elektrischen Antriebsmodule 100a, 100b im Wesentlichen verschleissfrei, weshalb sich ein solche Ausführungsform eines erfindungsgemässen Radsatzes 10a nicht nur energetisch effizient betreiben lässt, sondern auch äusserst wartungsarm ist. Dadurch kann der finanzielle und zeitliche Aufwand für den Unterhalt eines mit solchen Radsätzen ausgerüsteten Schienenfahrzeugs im Vergleich zu konventionellen, ausschliesslich mit Scheibenbremsen ausgerüsteten, Radsätzen wesentlich reduziert werden. Die in der **Fig. 2** gezeigte Scheibenbremse 200a dient einerseits der Erzeugung eines zusätzlichen Bremsmoments im Falle einer Notbremse und andererseits als Feststellbremse um ein ruhendes Schienenfahrzeug gegen ein Fortrollen zu sichern. Durch die erfindungsgemässe Verwendung der rekuperativen elektrischen Antriebsmodule 100a, 100b sowie des Retarders 800a kann eine im Vergleich zu konventionellen Radsätzen eher klein dimensionierte Scheibenbremse 200a verwendet werden, welche zudem auch einen viel geringeren Abrieb und damit bedeutend längere Wartungsintervalle aufweist.

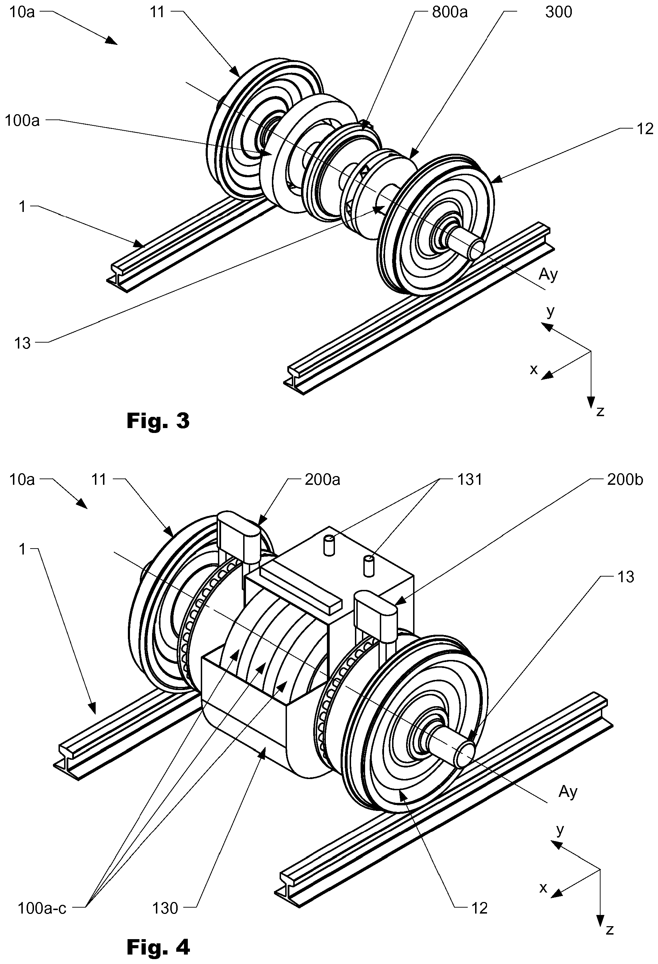

**Fig. 3** zeigt schematisch eine weitere Ausführungsform eines erfindungsgemässen Radsatzes 10a. Dieser weist ein rekuperatives elektrisches Antriebsmodul 100a sowie einen Retarder 800a, 800b auf, die auf der Radsatzwelle 13 angeordnet sind. Ebenfalls weist der Radsatz eine formschlüssige Feststellbremse 300 auf, die mittels einer formschlüssigen Verbindung ein Rotieren des Radsatzes 1 Oarelativ zu einer zugeordneten Schiene 1 beschränkt. Im Vergleich zu einer ebenfalls als Feststellbremse verwendbaren (reibschlüssige) Scheibenbremse kann eine solche formschlüssige Feststellbremse 300 vergleichsweise klein und relativ einfach gestaltet sein.

**Fig. 4** zeigt schematisch eine weitere Ausführungsform eines erfindungsgemässen Radsatzes 10a, welche drei auf einer Radsatzwelle 13 angeordnete rekuperative elektrische Antriebsmodule 100a-c aufweist. Diese sind in einem gemeinsamen staub- und wasserdichten Gehäuse 130 angeordnet. Dadurch können für die rekuperativen elektrischen Antriebsmodule 100a-c potentiell schädliche Umwelteinflüsse verhindert werden. Das Gehäuse 130 verfügt über Kühlanschlüsse 131 mittels welcher die im Innern des Gehäuses 130 angeordneten Komponenten an ein äusseres Kühlsystem 40 angeschlossen werden können. Die Kühlanschlüsse 131 können etwa Anschlüsse an einen Kühlmittelkreislauf eines Schienenfahrzeugs (nicht dargestellt) sein. Auf diese Weise können die rekuperativen elektrischen Antriebsmodule 100a-c effizient gekühlt werden, was deren Lebensdauer und Wirkungsgrad steigert. Ausserdem weist diese Ausführungsform eines erfindungsgemässen Radsatzes 10 zwei ebenfalls auf der Radsatzwelle angeordnete Scheibenbremsen 200a, 200b auf.

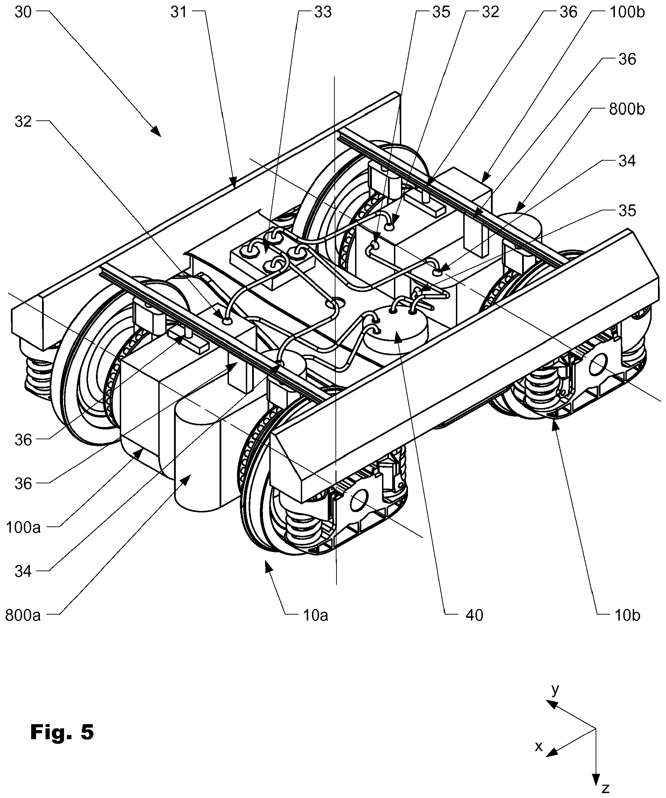

**Fig. 5** zeigt schematisch ein erfindungsgemässes Drehgestell 30 umfassend einen Drehgestellrahmen 31 sowie zwei mit dem Drehgestellrahmen 31 mechanisch verbundene erfindungsgemässe Radsätze 10a, 10b. Beide Radsätze 10a, 10b umfassen jeweils ein rekuperatives elektrisches Antriebsmodul 100a, 100b, welches über lösbare elektrische Verbinder 32 mit einem am Drehgestell 30 angeordneten elektrischen System 33 elektrisch verbunden ist. Ebenso verfügen beide Radsätze 10a, 10b jeweils über einen auf den Radsatzwellen 13 angeordneten elektrodynamischen Retarder 800a, 800b welche über zweite lösbare elektrische Verbinder 34 mit dem am Drehgestell 30 angeordneten elektrischen System 33 elektrisch verbunden sind. Die beiden rekuperativen elektrisches Antriebsmodule 100a, 100b sowie die beiden Retarder 800a, 800b sind über lösbaren fluidische Verbinder 35 mit einem am Drehgestell 30 angeordneten äusseren Kühlsystem 40 trennbar fluidisch verbunden. Die rekuperativen elektrischen Antriebsmodule 100a, 100b sowie die Retarder 800a, 800b sind jeweils über wenigstens lösbare mechanische Verbinder 36 mit dem Drehgestellrahmen 31 trennbar mechanisch verbunden ist. Durch die trennbaren elektrischen, fluidischen und mechanischen Verbindungen 32, 34, 35, 36 können die Radsätze 10a, 10b einschliesslich der darauf angebrachten Komponenten bei Bedarf relativ einfach vom Drehgestellrahmen 31 getrennt und gegen ihnen entsprechende Ersatz-Radsätze (nicht dargestellt) ausgetauscht werden, wodurch der Aufwand für Wartung und Reparatur wesentlich reduziert und der räumlichen Zugang zu den einzelnen Komponenten erhöht werden kann.

### LISTE DER BEZUGSZEICHEN

- 1: Schiene
- 10a,b: Radsatz
- 11: Erstes Rad
- 12: Zweites Rad
- 13: Radsatzwelle
- 30: Drehgestell
- 31: Drehgestellrahmen
- 32: erster lösbarer elektrischer Verbinder
- 33: elektrisches System
- 34: zweiter lösbarer elektrischer Verbinder
- 35: lösbarer fluidischer Verbinder
- 36: lösbarer mechanischer Verbinder

- 40: äusseres Kühlsystem
- 100a-c: Rekuperatives elektrisches Antriebsmodul
- 110: Stator-Anordnung
- 120: Rotor-Anordnung
- 130: Gehäuse
- 131: Kühlsystemanschluss
- 140: mechanisches Befestigungsmittel
- 200a,b: Scheibenbremse
- 210: Bremsscheibe
- 220: Bremszange
- 225: Aktuator
- 300: Feststellbremse
- 800a,b: Retarder

## Patentansprüche

1. Ein Radsatz (10a, 10b) für ein Vollbahn-Schienenfahrzeug umfassend
a. ein erstes Rad (11) und ein mittels einer Radsatzwelle (13) damit verbundenes zweites Rad (12), und
b. wenigstens ein auf der Radsatzwelle (13) angeordnetes rekuperatives elektrisches Antriebsmodul (100a-c), wobei
i. das rekuperative elektrische Antriebsmodul (100a-c) dazu eingerichtet ist,
1. wenn in einem Antriebsmodus betrieben, elektrische Energie in Rotationsenergie des Radsatzes (10a, 10b) umzuwandeln und,
2. wenn in einem Bremsmodus betrieben, Rotationsenergie des Radsatzes (10a, 10b) in elektrische Energie umzuwandeln, wobei
c. eine Mehrzahl K rekuperativer elektrischer Antriebsmodule (100a-c) auf der Radsatzwelle (13) angeordnet ist, **dadurch gekennzeichnet, dass**
d. der Radsatz (10a, 10b) ein erstes rekuperatives elektrisches Antriebsmodul mit einem ersten maximalen Wirkungsgrad in einem ersten Drehzahlbereich und ein zweites rekuperatives elektrisches Antriebsmodul mit einem zweiten maximalen Wirkungsgrad in einem zweiten Drehzahlbereich aufweist, wobei das obere Ende des zweiten Drehzahlbereichs höher liegt als das obere Ende des ersten Drehzahlbereichs und das untere Ende des ersten Drehzahlbereichs tiefer liegt als das untere Ende des zweiten Drehzahlbereichs.

2. Radsatz (10a, 10b) nach Anspruch 1, wobei sich die Drehzahlbereiche überlappen.

3. Radsatz (10a, 10b) nach einem der vorangehenden Ansprüche, wobei das erste rekuperative elektrische Antriebsmodul einen ersten maximalen Wirkungsgrad bei einer ersten Drehzahl und das zweite rekuperative elektrische Antriebsmodul einen zweiten maximalen Wirkungsgrad bei einer zweiten Drehzahl aufweist, wobei die zweite Drehzahl wenigstens 10% höher ist als die erste Drehzahl.

4. Radsatz (10a, 10b) nach einem der vorangehenden Ansprüche, wobei dies für den ersten und zweiten Wirkungsgrad während dem Antriebsmodus gilt, welche im Antriebsmodus dem Verhältnis der vom jeweiligen rekuperativen elektrischen Antriebsmodul (100a-c) abgegebenen mechanischen Leistung zu der von ihm aufgenommenen elektrischen Leistung entsprechen; und/oder wobei dies für den ersten und zweiten Wirkungsgrad während dem Bremsmodus gilt, welche im Bremsmodus dem Verhältnis der vom jeweiligen rekuperativen elektrischen Antriebsmodul (100a-c) abgegebenen elektrischen Leistung zu der von ihm aufgenommenen mechanischen Leistung entsprechen.

5. Der Radsatz (10a, 10b) gemäss einem der vorangehenden Ansprüche, **dadurch gekennzeichnet, dass** das wenigstens eine rekuperative elektrische Antriebsmodul (100a-c) eine Stator-Anordnung (110) und eine bezüglich der Stator-Anordnung (110) drehbar angeordnete Rotor-Anordnung (120) aufweist, wobei die Drehachse der Rotor-Anordnung (120) identisch mit der Drehachse (Ay) der ihr zugeordneten Radsatzwelle (13) ist; insbesondere dass die Stator-Anordnung (110) und die Rotor-Anordnung (120) Teile eines Torquemotors sind.

6. Der Radsatz (10a, 10b) gemäss einem der vorangehenden Ansprüche, **dadurch gekennzeichnet, dass** der Radsatz (10a, 10b) wenigstens einen Retarder (800a, 800b) zur Abbremsung der Rotation des Radsatzes (10a, 10b) aufweist, der ein hydrodynamischer Retarder oder eine elektrodynamisher Retarder ist.

7. Der Radsatz (10a, 10b) gemäss einem der vorangehenden Ansprüche, **dadurch gekennzeichnet, dass** das wenigstens eine rekuperative elektrische Antriebsmodul (100a-c) wenigstens teilweise in einem Gehäuse (130) angeordnet ist, wobei das Gehäuse (130) wenigstens einen Kühlsystemanschluss (131) zum Anschluss an ein äusseres Kühlsystem (40) zur Kühlung wenigstens eines, wenigstens teilweise im Gehäuse angeordneten rekuperativen elektrischen Antriebsmoduls (100a-c) und/oder wenigstens eines wenigstens teilweise im Gehäuse angeordneten Retarders (800a, 800b) aufweist.

8. Der Radsatz (10a, 10b) gemäss einem der vorangehenden Ansprüche, **dadurch gekennzeichnet, dass** der Radsatz (10a, 10b) wenigstens eine Scheibenbremse (200a, 200b) mit einer auf der Radsatzwelle (13) angeordneten Bremsscheibe (210) umfasst; insbesondere dass die wenigstens eine Scheibenbremse (200a, 200b) einen elektromechanischen und/oder einen hydraulischen Aktuator (225) zum Betätigen eines Bremssattels (220) aufweist.

9. Der Radsatz (10a, 10b) gemäss einem der vorangehenden Ansprüche, **dadurch gekennzeichnet, dass** der Radsatz (10a, 10b) wenigstens eine formschlüssige Feststellbremse (300) aufweist, die wenigstens teilweise mittels einer formschlüssigen Verbindung ein Rotieren des Radsatzes (10a, 10b) relativ zu einer dem Radsatz zugeordneten Schiene (1) beschränkt.

10. Ein Drehgestell (30) umfassend
a. wenigstens einen Drehgestellrahmen (31) und
b. wenigstens einen mit dem Drehgestellrahmen (31) mechanisch verbundenen Radsatz (10a, 10b) gemäss einem der vorangehenden Ansprüche 1 bis 9.

11. Das Drehgestell (30) gemäss Anspruch 10, **dadurch gekennzeichnet, dass** wenigstens ein an einem Radsatz (10a, 10b) angeordnetes rekuperatives elektrisches Antriebsmodul (100a-c) über wenigstens einen ersten lösbaren elektrischen Verbinder (32) mit einem am Drehgestell (30) angeordneten elektrischen System (33) trennbar elektrisch verbunden ist; und/oder dass wenigstens ein an einem Radsatz (10a, 10b) angeordneter Retarder (800a, 800b) über wenigstens einen zweiten lösbaren elektrischen Verbinder (34) mit einem am Drehgestell (30) angeordneten elektrischen System (33) trennbar elektrisch verbunden ist.

12. Das Drehgestell (30) gemäss einem der Ansprüche 10 bis 11, **dadurch gekennzeichnet, dass** wenigstens ein rekuperatives elektrisches Antriebsmodul (100a-c) und/oder wenigstens ein an einem Radsatz (10a, 10b) angeordneter Retarder (800a, 800b) über wenigstens einen lösbaren fluidischen Verbinder (35) mit einem am Drehgestell (30) angeordneten äusseren Kühlsystem (40) trennbar fluidisch verbunden ist.

13. Das Drehgestell (30) gemäss einem der Ansprüche 10 bis 12, **dadurch gekennzeichnet, dass** wenigstens ein an einem Radsatz (10a, 10b) angeordnetes rekuperatives elektrisches Antriebsmodul (100a-c) und/oder ein an einem Radsatz (10a, 10b) angeordneter Retarder (800a, 800b) über wenigstens einen lösbaren mechanischen Verbinder (36) mit dem Drehgestellrahmen (31) trennbar mechanisch verbunden ist.

14. Ein Schienenfahrzeug umfassend eine Mehrzahl N von Radsätzen (10a, 10b) gemäss einem der Ansprüche 1 bis 9; insbesondere dass sämtliche N Radsätze (10a, 10b) Radsätze (100a, 10b) gemäss einem der Ansprüche 1 bis 9 sind.

15. Ein Schienenfahrzeug umfassend wenigstens ein Drehgestell (30) gemäss einem der Ansprüche 10 bis 12.

16. Eine Verbund von wenigstens zwei Schienenfahrzeugen gemäss einem der Ansprüche 14 bis 15.

17. Ein Antriebssystem mit wenigstens einem Radsatz (10a, 10b) gemäss einem der Ansprüche 1 bis 9 für ein Schienenfahrzeug, das Antriebssystem umfassend wenigstens eine lokale Antriebssteuerung, welche
a. im Antriebsmodus die Antriebsleistung wenigstens eines rekuperativen elektrischen Antriebsmoduls (100a-c) wenigstens dieses Schienenfahrzeugs überwacht und bei Abweichung von einem Antriebs-Sollwert die Antriebsleistung wenigstens eines rekuperativen elektrischen Antriebsmoduls (100a-c) anpasst und/oder welche
b. im Bremsmodus die Bremsleistung wenigstens eines rekuperativen elektrischen Antriebsmoduls (100a-c) wenigstens dieses Schienenfahrzeugs überwacht und bei Abweichung von einem Brems-Sollwert die Bremsleistung wenigstens eines rekuperativen elektrischen Antriebsmoduls (100a-c) anpasst.

18. Das Antriebssystem gemäss Anspruch 17, **dadurch gekennzeichnet, dass** das Antriebssystem eine Rückspeisungseinrichtung zur Einspeisung wenigstens eines Teils der von wenigstens einem rekuperativen elektrischen Antriebsmodul (100a-c) im Bremsmodus erzeugten elektrischen Energie in eine Fahrleitung aufweist.

19. Das Antriebssystem gemäss einem der Ansprüche 17 oder 18, **dadurch gekennzeichnet, dass** das Antriebssystem eine Leistungssteuerung umfasst, welche wenigstens einen Teil der von wenigstens einem rekuperativen elektrischen Antriebsmodul (100a-c) im Bremsmodus erzeugten elektrischen Energie einem elektrischen Verbraucher zur Verfügung stellt.

20. Das Antriebssystem gemäss einem der Ansprüche 17 bis 19, **dadurch gekennzeichnet, dass** das Antriebssystem wenigstens ein Energiespeichermodul zur Speicherung wenigstens eines Teils der von wenigstens einem rekuperativen elektrischen Antriebsmodul (100a-c) im Bremsmodus erzeugen elektrischen Energie aufweist.

21. Das Antriebssystem gemäss Anspruch 20, **dadurch gekennzeichnet, dass** das Antriebssystem eine Leistungssteuerung umfasst, welche wenigstens einen Teil der im wenigstens einen Energiespeichermodul gespeicherten elektrische Energie einem elektrischen Verbraucher zur Verfügung stellt.

22. Das Antriebssystem gemäss einem der Ansprüche 17 bis 21, **dadurch gekennzeichnet, dass** es eine Antriebssteuerung aufweist, welche elektrische Energie von einer Fahrleitung und/oder von wenigstens einem Energiespeichermodul wenigstens einem rekuperativen elektrischen Antriebsmodul (100a-c) im Antriebsmodus zuführt.

23. Das Antriebssystem gemäss einem der der Ansprüche 17 bis 22, **dadurch gekennzeichnet, dass** es eine Dissipationsvorrichtung umfasst, welche wenigstens einen Teil der von wenigstens einem rekuperativen elektrischen Antriebsmodul (100a-c) im Bremsmodus erzeugten elektrischen Energie in thermische Energie umwandelt.

## Claims

1. Wheelset (10a, 10b) for a mainline rail vehicle, comprising
a. a first wheel (11) and a second wheel (12) coupled thereto by means of a wheelset axle (13), and
b. at least one recuperative electric drive module (100a-c) arranged on the wheelset axle (13) wherein
i. the recuperative electric drive module (100a-c) is configured
1. when operated in a drive mode, to convert electrical energy into rotational energy of the wheelset (10a, 10b), and
2. when operated in a braking mode, to convert rotational energy of the wheelset (10a, 10b) into electrical energy, wherein
c. a plurality of K recuperative electric drive modules (100a-c) is arranged on the wheelset axle (13), **characterized in that**
d. the wheelset (10a, 10b) has a first recuperative electric drive module with a first maximum efficiency in a first rotational speed range and a second recuperative electric drive module with a second maximum efficiency in a second rotational speed range, wherein the upper end of the second rotational speed range is higher than the upper end of the first rotational speed range and the lower end of the first rotational speed range is lower than the lower end of the second rotational speed range.

2. Wheelset (10a, 10b) according to Claim 1, wherein the rotational speed ranges overlap.

3. Wheelset (10a, 10b) according to one of the preceding claims, wherein the first recuperative electric drive module has a first maximum efficiency at a first rotational speed and the second recuperative electric drive module has a second maximum efficiency at a second rotational speed, wherein the second rotational speed is at least 10% higher than the first rotational speed.

4. Wheelset (10a, 10b) according to one of the preceding claims, wherein this applies to the first and second efficiency during the drive mode which, in the drive mode, correspond to the ratio of the mechanical power output by the respective recuperative electric drive module (100a-c) to the electrical power consumed by it; and/or wherein this applies to the first and second efficiency during the braking mode which, in the braking mode, correspond to the ratio of the electrical power output by the respective recuperative electric drive module (100a-c) to the mechanical power consumed by it.

5. Wheelset (10a, 10b) according to one of the preceding claims, **characterized in that** the at least one recuperative electric drive module (100a-c) has a stator arrangement (110) and a rotor arrangement (120) arranged such that it can rotate with respect to the stator arrangement (110), wherein the axis of rotation of the rotor arrangement (120) is identical to the axis of rotation (Ay) of the wheelset axle (13) assigned thereto; in particular **in that** the stator arrangement (110) and the rotor arrangement (120) are parts of a torque motor.

6. Wheelset (10a, 10b) according to one of the preceding claims, **characterized in that** the wheelset (10a, 10b) has at least one retarder (800a, 800b) for braking the rotation of the wheelset (10a, 10b), which is a hydrodynamic retarder or an electrodynamic retarder.

7. Wheelset (10a, 10b) according to one of the preceding claims, **characterized in that** the at least one recuperative electric drive module (100a-c) is at least partly arranged in a housing (130), wherein the housing (130) has at least one cooling system connection (131) for connection to an external cooling system (40) for cooling at least one recuperative electric drive module (100a-c) at least partly arranged in the housing and/or at least one retarder (800a, 800b) at least partly arranged in the housing.

8. Wheelset (10a, 10b) according to one of the preceding claims, **characterized in that** the wheelset (10a, 10b) comprises at least one disc brake (200a, 200b) with a brake disc (210) arranged on the wheelset axle (13); in particular **in that** the at least one disc brake (200a, 200b) has an electromechanical and/or a hydraulic actuator (225) for actuating a brake caliper (220).

9. Wheelset (10a, 10b) according to one of the preceding claims, **characterized in that** the wheelset (10a, 10b) has at least one positively locking parking brake (300) which, by means of a positively locking connection, at least partly restricts rotation of the wheelset (10a, 10b) relative to a rail (1) associated with the wheelset.

10. Bogie (30) comprising
a. at least one bogie frame (31) and
b. at least one wheelset (10a, 10b) according to one of the preceding Claims 1 to 9 mechanically connected to the bogie frame (31).

11. Bogie (30) according to Claim 10, **characterized in that** at least one recuperative electric drive module (100a-c) arranged on a wheelset (10a, 10b) is separably electrically connected via at least one first detachable electric connector (32) to an electrical system (33) arranged on the bogie (30); and/or **in that** at least one retarder (800a, 800b) arranged on a wheelset (10a, 10b) is separably electrically connected via at least one second detachable electrical connector (34) to an electrical system (33) arranged on the bogie (30).

12. Bogie (30) according to either of Claims 10 and 11, **characterized in that** at least one recuperative electric drive module (100a-c) and/or at least one retarder (800a, 800b) arranged on a wheelset (10a, 10b) is/are separably fluidically connected via at least one detachable fluidic connector (35) to an external cooling system (40) arranged on the bogie (30).

13. Bogie (30) according to one of Claims 10 to 12, **characterized in that** at least one recuperative electric drive module (100a-c) arranged on a wheelset (10a, 10b) and/or a retarder (800a, 800b) arranged on a wheelset (10a, 10b) is/are separably mechanically connected via at least one detachable mechanical connector (36) to the bogie frame (31).

14. Rail vehicle comprising a plurality N of wheelsets (10a, 10b) according to one of Claims 1 to 9; in particular in that all the N wheelsets (10a, 10b) are wheelsets (100a, 10b) according to one of Claims 1 to 9.

15. Rail vehicle comprising at least one bogie (30) according to one of Claims 10 to 12.

16. Combination of at least two rail vehicles according to either of Claims 14 and 15.

17. Drive system having at least one wheelset (10a, 10b) according to one of Claims 1 to 9 for a rail vehicle, the drive system comprising at least one local drive control system which
a. in the drive mode, monitors the drive power of at least one recuperative electric drive module (100a-c) of at least this rail vehicle and, in the event of a deviation from a target drive value, adapts the drive power of at least one recuperative electric drive module (100a-c) and/or which
b. in the braking mode, monitors the braking power of at least one recuperative electric drive module (100a-c) of at least this rail vehicle and, in the event of a deviation from a target braking value, adapts the braking power of at least one recuperative electric drive module (100a-c).

18. Drive system according to Claim 17, **characterized in that** the drive system has a feedback device for feeding back at least part of the electrical energy produced by at least one recuperative electric drive module (100a-c) in the braking mode into an overhead line.

19. Drive system according to either of Claims 17 and 18, **characterized in that** the drive system comprises a power control system, which provides at least part of the electrical energy produced by at least one recuperative electric drive module (100a-c) in the braking mode to an electrical consumer.

20. Drive system according to one of Claims 17 to 19, **characterized in that** the drive system has at least one energy storage module for storing at least part of the electrical energy generated by at least one recuperative electric drive module (100a-c) in the braking mode.

21. Drive system according to Claim 20, **characterized in that** the drive system comprises a power control system, which provides at least part of the electrical energy stored in the at least one energy storage module to an electrical consumer.

22. Drive system according to one of Claims 17 to 21, **characterized in that** it has a drive control system which, in the drive mode, feeds electrical energy from an overhead line and/or from at least one energy storage module to at least one recuperative electric drive module (100a-c) .

23. Drive system according to one of Claims 17 to 22, **characterized in that** it comprises a dissipation device, which converts at least part of the electrical energy generated by at least one recuperative electric drive module (100a-c) in the braking mode into thermal energy.

## Revendications

1. Essieu monté (10a, 10b) destiné à un véhicule ferroviaire de grandes lignes, ledit essieu comprenant
a. une première roue (11) et une deuxième roue (12) reliée à la première au moyen d'un arbre d'essieu monté (13), et
b. au moins un module d'entraînement électrique à récupération (100a-c) disposé sur l'arbre d'essieu monté (13),
i. le module d'entraînement électrique à récupération (100a-c) étant conçu pour
1. lors d'un fonctionnement en mode propulsion, convertir l'énergie électrique en énergie de rotation de l'essieu monté (10a, 10b) et,
2. lors d'un fonctionnement en mode freinage, convertir l'énergie de rotation de l'essieu monté (10a, 10b) en énergie électrique,
c. une pluralité K de modules d'entraînement électrique à récupération (100a-c) étant disposée sur l'arbre d'essieu monté (13), **caractérisé en ce que**
d. l'essieu monté (10a, 10b) comporte un premier module d'entraînement électrique à récupération ayant un premier rendement maximal dans une première plage de vitesses de rotation et un deuxième module d'entraînement électrique à récupération ayant un deuxième rendement maximal dans une deuxième plage de vitesses de rotation, l'extrémité supérieure de la deuxième plage de vitesses de rotation étant supérieure à l'extrémité supérieure de la première plage de vitesses de rotation et l'extrémité inférieure de la première plage de vitesses de rotation étant inférieure à l'extrémité inférieure de la deuxième plage de vitesses de rotation.

2. Essieu monté (10a, 10b) selon la revendication 1, les plages de vitesses de rotation se chevauchant.

3. Essieu monté (10a, 10b) selon l'une des revendications précédentes, le premier module d'entraînement électrique à récupération ayant un premier rendement maximum à une première vitesse de rotation et le deuxième module d'entraînement électrique à récupération ayant un deuxième rendement maximum à une deuxième vitesse de rotation, la deuxième vitesse de rotation étant supérieure d'au moins 10 % à la première vitesse de rotation.

4. Essieu monté (10a, 10b) selon l'une des revendications précédentes, cela s'appliquant pendant le mode d'entraînement aux premier et deuxième rendements qui correspondent dans le mode d'entraînement au rapport de la puissance mécanique délivrée par le module d'entraînement électrique à récupération respectif (100a-c) à la puissance électrique consommée par celui-ci ; et/ou cela s'appliquant pendant le mode de freinage aux premier et deuxième rendements qui correspondent dans le mode freinage au rapport de la puissance électrique délivrée par le module d'entraînement électrique à récupération respectif (100a-c) à la puissance mécanique consommée par celui-ci.

5. Essieu monté (10a, 10b) selon l'une des revendications précédentes, **caractérisé en ce que** l'au moins un module d'entraînement électrique à récupération (100a-c) comporte un ensemble formant stator (110) et un ensemble formant rotor (120) qui est disposé de manière rotative par rapport à l'ensemble formant stator (110),
l'axe de rotation de l'ensemble formant rotor (120) étant identique à l'axe de rotation (Ay) de l'arbre d'essieu monté (13) qui lui est associé ; en particulier **en ce que** l'ensemble formant stator (110) et l'ensemble formant rotor (120) font partie d'un moteur couple.

6. Essieu monté (10a, 10b) selon l'une des revendications précédentes, **caractérisé en ce que** l'essieu monté (10a, 10b) comporte au moins un ralentisseur (800a, 800b) qui est destiné à freiner la rotation de l'ensemble monté (10a, 10b) et qui est un ralentisseur hydrodynamique ou un ralentisseur électrodynamique.

7. Essieu monté (10a, 10b) selon l'une des revendications précédentes, **caractérisé en ce que** l'au moins un module d'entraînement électrique à récupération (100a-c) est au moins en partie disposé dans un boîtier (130), le boîtier (130) comportant au moins une borne de système de refroidissement (131) destinée au raccordement à un système de refroidissement extérieur (40) afin de refroidir au moins un module d'entraînement électrique à récupération (100a-c) disposé au moins en partie dans le boîtier et/ou au moins un ralentisseur disposé au moins en partie dans le boîtier (800a, 800b).

8. Ensemble monté (10a, 10b) selon l'une des revendications précédentes, **caractérisé en ce que** l'ensemble monté (10a, 10b) comprend au moins un frein à disque (200a, 200b) pourvu d'un disque de frein (210) disposé sur l'arbre d'essieu monté (13) ; en particulier **en ce que** l'au moins un frein à disque (200a, 200b) comporte un actionneur électromécanique et/ou un actionneur hydraulique (225) destinés à actionner un étrier de frein (220).

9. Essieu monté (10a, 10b) selon l'une des revendications précédentes, **caractérisé en ce que** l'essieu monté (10a, 10b) comporte au moins un frein de stationnement à complémentarité de formes (300) qui limite, au moins partiellement au moyen d'une liaison par complémentarité de formes, la rotation de l'essieu monté (10a, 10b) par rapport à un rail (1) associé à l'essieu monté.

10. Boggie (30) comprenant
a. au moins un châssis de boggie (31) et
b. au moins un essieu monté (10a, 10b) relié mécaniquement au châssis de boggie (31) selon l'une des revendications précédentes 1 à 9.

11. Boggie (30) selon la revendication 10, **caractérisé en ce qu'**au moins un module d'entraînement électrique à récupération (100a-c) disposé sur un essieu monté (10a, 10b) est relié électriquement de manière séparable à un système électrique (33), disposé sur le boggie (30), par le biais d'au moins un premier connecteur électrique amovible (32) ; et/ou **en ce qu'**au moins un ralentisseur (800a, 800b), disposé sur un essieu monté (10a, 10b), est relié électriquement de manière séparable à un système électrique (33), disposé sur le boggie (30), par le biais d'au moins un deuxième connecteur électrique amovible (34).

12. Boggie (30) selon l'une des revendications 10 à 11, **caractérisé en ce qu'**au moins un module d'entraînement électrique à récupération (100a-c) et/ou au moins un ralentisseur (800a, 800b), disposé sur un essieu monté (10a, 10b), sont reliés fluidiquement de manière séparable à un système de refroidissement extérieur (40), disposé sur le boggie (30), par le biais d'au moins un connecteur fluidique amovible (35).

13. Boggie (30) selon l'une des revendications 10 à 12, **caractérisé en ce qu'**au moins un module d'entraînement électrique à récupération (100a-c) disposé sur un essieu monté (10a, 10b) et/ou un ralentisseur (800a, 800b) disposé sur un essieu monté (10a, 10b) sont reliés mécaniquement de manière séparable au châssis de boggie (31) par le biais d'au moins un connecteur mécanique amovible (36).

14. Véhicule ferroviaire comprenant une pluralité N d'essieux montés (10a, 10b) selon l'une des revendications 1 à 9 ; en particulier en ce que les N essieux montés (10a, 10b) sont tous des essieux montés (100a, 10b) selon l'une des revendications 1 à 9.

15. Véhicule ferroviaire comprenant au moins un boggie (30) selon l'une des revendications 10 à 12.

16. Groupement d'au moins deux véhicules ferroviaires selon l'une des revendications 14 à 15.

17. Système d'entraînement comprenant au moins un essieu monté (10a, 10b) selon l'une des revendications 1 à 9 destiné à un véhicule ferroviaire, le système d'entraînement comprenant au moins une commande d'entraînement locale qui
a. surveille dans le mode d'entraînement la puissance d'entraînement d'au moins un module d'entraînement électrique à récupération (100a-c) d'au moins ce véhicule ferroviaire et adapte la puissance d'entraînement d'au moins un module d'entraînement électrique à récupération (100a-c) en cas d'écart par rapport à une valeur d'entraînement cible et/ou qui
b. surveille dans le mode de freinage la puissance de freinage d'au moins un module d'entraînement électrique à récupération (100a-c) d'au moins ce véhicule ferroviaire et adapte la puissance de freinage d'au moins un module d'entraînement électrique à récupération (100a-c) en cas d'écart par rapport à une valeur de freinage cible.

18. Système d'entraînement selon la revendication 17, **caractérisé en ce que** le système d'entraînement comporte un module de rétroaction destiné à injecter au moins une partie de l'énergie électrique, générée par au moins un module d'entraînement électrique à récupération (100a-c) dans le mode freinage, dans une caténaire.

19. Système d'entraînement selon la revendication 17 ou 18, **caractérisé en ce que** le système d'entraînement comprend une commande de puissance qui met au moins une partie de l'énergie électrique, générée par au moins un module d'entraînement électrique à récupération (100a-c) dans le mode freinage, à disposition d'un consommateur électrique.

20. Système d'entraînement selon l'une des revendications 17 à 19, **caractérisé en ce que** le système d'entraînement comporte au moins un module de stockage d'énergie destiné à stocker au moins une partie de l'énergie électrique générée par au moins un module d'entraînement électrique à récupération (100a-c) dans le mode freinage.

21. Système d'entraînement selon la revendication 20, **caractérisé en ce que** le système d'entraînement comprend une commande de puissance qui met au moins une partie de l'énergie électrique, stockée dans l'au moins un module de stockage d'énergie, à disposition d'un consommateur électrique.

22. Système d'entraînement selon l'une des revendications 17 à 21, **caractérisé en ce qu'**il comporte une commande d'entraînement qui amène de l'énergie électrique depuis une caténaire et/ou au moins un module de stockage d'énergie à au moins un module d'entraînement électrique à récupération (100a-c) dans le mode d'entraînement.

23. Système d'entraînement selon l'une des revendications 17 à 22, **caractérisé en ce qu'**il comprend un dispositif de dissipation qui convertit au moins une partie de l'énergie électrique, générée par au moins un module d'entraînement électrique à récupération (100a-c) dans le mode freinage, en énergie thermique.
